# FASCICULE DE BREVET EUROPEEN

(11) **EP 0 879 796 B1**
(45) Date de publication et mention de la délivrance du brevet: **16.06.2004**
(21) Numéro de dépôt: 98401200.5
(22) Date de dépôt: 19.05.1998
(51) Int. Cl.: C03B 9/48, C22C 9/01, C22C 9/06

(54) **Moule en alliage cupro-aluminium pour la fabrication de bouteilles**
Form aus einer Kupfer-Aluminium-Legierung zum Herstellen von Flaschen
Mold made of a cupro-aluminium alloy for making glass bottles

(30) Priorité: 23.05.1997 FR 9706293
(43) Date de publication de la demande: 25.11.1998
(73) Titulaire: SAINT-GOBAIN EMBALLAGE, 92400 Courbevoie (FR)
(72) Inventeur: Hallouis, Martine, 54000 Nancy (FR)
(74) Mandataire: Breton, Jean-Claude

(56) Documents cités:
- US-A- 4 732 602

## Description

La présente invention concerne des moules pour la fabrication de produits verriers, par exemple des bouteilles.

Cette fabrication est, en général, effectuée en deux étapes principales. Au cours de la première étape, la paraison de verre à une température pouvant avoisiner environ 1100°C est mise en contact avec un moule ébaucheur relié, à sa partie inférieure, à un moule de bague. Il est important de refroidir la partie inférieure de la paraison, en contact avec le moule de bague, suffisamment pour qu'elle se solidifie quasiment selon la forme définitive voulue du goulot. Par contre, la partie restante de la paraison doit rester plus chaude, suffisamment molle pour permettre sa mise en forme ultérieure.

Ce refroidissement différencié de la paraison peut être obtenu par un moyen de refroidissement extérieur, tel qu'un soufflage d'air ventilé, appliqué sur les flancs du moule de bague ou par l'emploi de matériaux différents pour le moule de bague et pour le moule ébaucheur. En effet, si le matériau du moule de bague présente une conductivité (ou diffusivité) thermique supérieure, il évacue de la partie correspondante de la paraison une quantité de chaleur plus importante, et cette partie atteint une température plus basse que le reste de la paraison.

Les bouteilles sont en général retournées avant d'être mises à leur forme définitive, lors de la seconde étape principale, dans des moules finisseurs. Ceux-ci ont à absorber une quantité de chaleur plus grande que les moules ébaucheurs, car les bouteilles y atteignent localement des températures inférieures à la température de solidification du verre.

Tous les moules mentionnés précédemment sont fréquemment réalisés en fonte. Celle-ci ne donne cependant pas entièrement satisfaction. Son aspect de surface est grossier. Plus gênante encore est sa tendance à la fissuration par fatigue thermique.

Le bronze est également utilisé pour la réalisation des moules (par ex. US-A-4 732 602); il est cependant très sensible à la corrosion et à l'oxydation. Pour cette raison a été envisagé l'emploi de bronze marine contenant, en général, environ 9-10 % d'Al, 4-5 % de Fe, 4-5 % de Ni, le reste étant essentiellement constitué de Cu et d'impuretés habituelles - tous ces pourcentages étant des pourcentages pondéraux, comme dans la suite de la description -. Le bronze marine présente en effet les avantages conjugués d'une bonne tenue à la corrosion, d'une absence de fissuration dans les conditions de choc thermique propres à la fabrication des bouteilles et d'une structure de surface très fine.

Cependant, dans les utilisations des moules entrant dans le cadre de l'invention, il est souvent prescrit d'en graisser la surface. Cette graisse forme, par élévation de température, des dépôts de graphite. Or, du fait que les moules subissent un cycle thermique alterné à une fréquence de 10 cycles/minute et avec des températures atteignant des valeurs relativement hautes, on observe, y compris dans le cas du bronze marine, une oxydation en surface avec formation de cavités et de divers défauts d'aspects, sur lesquels les dépôts de graphite s'accrochent. Ceci rend nécessaire un nettoyage périodique d'autant plus vigoureux. Il en résulte une usure, donc un agrandissement du moule, dans une mesure d'autant plus importante que sa surface est oxydée.

L'invention a donc pour but de mettre à disposition un moule dont le matériau garantisse une bonne stabilité de ses dimensions utiles sur une durée accrue, tout en préservant l'absence de fissuration par fatigue thermique et la finesse d'aspect de surface déjà obtenues avec le bronze marine.

Ce but est atteint par l'invention qui a pour objet un moule particulièrement bien adapté à la fabrication de produits verriers, notamment de bouteilles, et dont une partie au moins est réalisée en un alliage cupro-aluminium.

L'invention réside plus précisément dans les teneurs de cet alliage en éléments actifs :
- de 0,02 % au total à la limite de solubilité, en particulier 0,02-1,0 % d'un ou plusieurs éléments choisis parmi Sc, Sr, Y, Zr et Hf,
- et/ou de 0,02 % au total à la limite de solubilité, en particulier 0,02-2,0 % d'un ou plusieurs lanthanides.

Il a en effet été constaté, non sans surprise, que lors d'une utilisation de ce moule telle qu'envisagée au départ et mentionnée ci-dessus, les dépôts de graphite issus de la graisse adhèrent faiblement aux parois du moule et en sont facilement éliminés, même dans des conditions de nettoyage très douces. Une fois ces dépôts éliminés, on observe beaucoup moins de cavités, aspérités et irrégularités de surface en général et, en dimensions plus petites, que dans les moules connus. Ceci explique que les dépôts ne s'accrochent pas à la surface du moule. De plus, les parois du moule subissent une érosion bien inférieure, pour des conditions de nettoyage identiques, bien entendu. Globalement, les inventeurs ont établi qu'une augmentation minimale de 30 % de la durée de vie des moules est obtenue dans les conditions réelles d'une fabrication de bouteilles. Ainsi, non seulement le niveau d'encrassement des moules nécessitant leur démontage en vue de leur nettoyage est atteint plus tardivement, mais l'usure des moules est également plus lente, retardant le moment de leur mise en rebut. Le moule conforme à l'invention présente une résistance accrue à la corrosion.

Selon deux modes de réalisation particuliers, les teneurs en éléments actifs sont : 0,1-0,5 % d'Y, respectivement un ou plusieurs lanthanides, chacun à raison de 0,01-0,8 % et, en particulier :
- 0,05-0,7 % de Ce,
- 0,04-0,4 % de La,
- 0,02-0,4 % de Nd, et
- 0,005-0,05 % de Pr.

De préférence, les teneurs de l'alliage constituant une partie au moins du moule de l'invention sont :
- 5-15 % d'Al,
- 2-7 % ou 12-18 % de Ni,
- 2-7 % ou au plus 1 % de Fe à condition, dans ce dernier cas, que la teneur en Ni soit comprise entre 12 et 18 %,
- 0,05-1,5 % ou, en particulier, 0,2-0,8 % de Si,
- 0,02-2 % ou, en particulier, 0,6-1,4 % de Mn,
- au plus 0,25 % ou 6-12 % de Zn à condition, dans ce dernier cas, que la teneur en Fe soit d'au plus 1 %,
- le reste étant essentiellement constitué de Cu, des éléments actifs susmentionnés et d'impuretés habituelles.

Deux catégories d'alliage se sont révélées particulièrement remarquables au fur et à mesure de la mise au point de l'invention.

La première catégorie se caractérise par les teneurs suivantes :
- 8-11 % d'Al,
- 3,5-5,5 de Ni,
- 3,5-5,5 % de Fe.

Les alliages de la seconde catégorie, particulièrement adaptés à la réalisation de moules de bague, contiennent :
- 8-11 % d'Al,
- 14-16 % de Ni,
- au plus 1 % de Fe,
- et, le cas échéant, 8-10 % de Zn.

Il convient de préciser que la conductivité et la diffusivité thermiques des alliages de l'invention sont relativement élevées, notamment par rapport à la fonte habituellement mise en oeuvre. Ainsi, dans la mesure où la solidification du verre est recherchée dans le moule de bague et dans le moule finisseur, l'invention est particulièrement dédiée à ces deux types de moules et notamment pour ce dernier, aussi bien aux coquilles qu'au fond du moule finisseur.

La constitution d'un moule ébaucheur en un alliage de l'invention nécessite une adaptation de la synchronisation des étapes de passage dans les moules ébaucheurs et dans les moules finisseurs. En effet, il faut diminuer le temps de passage dans le moule ébaucheur pour éviter une solidification du verre.

Dans ces conditions, le problème de synchronisation peut être résolu en diminuant corrélativement le temps de passage dans le moule finisseur par la mise en oeuvre d'un matériau constitutif de conductivité thermique encore supérieure ou bien en utilisant deux moules finisseurs pour un moule ébaucheur. Les moules ébaucheurs (coquilles, fond) font donc également partie de l'objet de l'invention.

En ce qui concerne le procédé d'élaboration des moules de l'invention, les inventeurs ont constaté qu'une coulée sur refroidisseur aboutissait avantageusement à une structure fine résistant au mieux aux cycles thermiques et garantissait la santé du métal. Rien n'empêche cependant de réaliser des pièces dans un alliage utilisable conformément à l'invention par coulée en sable avec ou sans refroidisseur et coulée continue.

L'exemple suivant illustre l'invention.

### EXEMPLE

On élabore des alliages dont les teneurs, exprimées en pourcentages pondéraux, sont consignées dans le tableau suivant. Les éléments contenus en faibles proportions à titre d'impuretés habituelles, ne sont pas indiqués.

| Alliage n° | 1 | 2 | 3 | 4 | 5 | 6 | 7 | 8 |
|---|---|---|---|---|---|---|---|---|
| Al | 8-10 | 8-10 | 8-10 | 8-10 | 8-10 | 8-10 | 8-10 | 8-10 |
| Ni | 3,5-5,5 | 14-16 | 14-16 | 3,5-5,5 | 3,5-5,5 | 3,5-5,5 | 3,5-5,5 | 3,5-5,5 |
| Zn | < 0,25 | 8-10 | < 0,25 | < 0,25 | < 0,25 | < 0,25 | < 0,25 | < 0,25 |
| Fe | 3,5-5,5 | < 1 | < 1 | 3,5-5,5 | 3,5-5,5 | 3,5-5,5 | 3,5-5,5 | 3,5-5,5 |
| Si | 0,3-0,7 | < 0,2 | < 0,2 | 0,3-0,7 | 0,3-0,7 | 0,07-0,13 | 0,7-1,3 | 0,3-0,7 |
| Y | 0,2-0,4 | 0,15-0,25 | 0,2-0,4 | 0,05-0,15 | 0,15-0,25 | 0,2-0,4 | 0,2-0,4 | - |
| Mn | 0,5-1,5 | < 1 | < 1 | 0,5-1,5 | 0,5-1,5 | 0,5-1,5 | 0,5-1,5 | 0,5-1,5 |
| Ce | - | - | - | - | - | - | - | 0,2-0,5 |
| La | - | - | - | - | - | - | - | 0,1-0,2 |
| Nd | - | - | - | - | - | - | - | 0,05-0,15 |
| Pr | - | - | - | - | - | - | - | 0,01-0,02 |
| Cu | Solde | Solde | Solde | Solde | Solde | Solde | Solde | Solde |

| | | | | | | | | |
|---|---|---|---|---|---|---|---|---|
| - : teneur faible non significative. | | | | | | | | |

Des plaquettes sont réalisées en chacun de ces huit alliages et soumises à des essais de corrosion de 24 h à 500°C dans des atmosphères différentes :
a) une atmosphère contenant 200 ppm d'HCl,
b) et une atmosphère à 1500 ppm de SO₂.

La comparaison des alliages 1, 4 et 5 montre qu'une teneur moyenne de 0,3 % en Y se traduit par une corrosion moindre.

La comparaison des alliages 1, 6 et 7 montre qu'une teneur moyenne de 0,5 % en Si est préférable.

On fabrique des moules finisseurs en alliages 1, 3 et 8 d'une part et un moule de bague en alliage 2 d'autre part.

Dans les conditions habituelles d'une fabrication de bouteilles les moules résistent mieux à la corrosion, de sorte que leur longévité est accrue dans tous les cas d'au moins 30 %.

## Revendications

1. Moule pour la fabrication de produits verriers dont une partie au moins de l'empreinte est constituée d'un alliage cupro-aluminium, **caractérisé en ce que** ledit alliage contient, en poids :
• de 0,02% au total à la limite de solubilité d'un ou plusieurs éléments choisis parmi Sc, Sr, Y, Zr et Hf,
• et/ou de 0,02% au total à la limite de solubilité d'un ou plusieurs lanthanides,
• 5-15% d'Al,
• 2-7% ou 12-18% de Ni,
• 2-7% ou au plus 1% de Fe étant entendu, dans ce dernier cas, que la teneur en Ni est comprise entre 12 et 18%,
• 0,05-1,5% de Si,
• 0,02-2% de Mn,
• au plus 0,25% ou 6-12% de Zn étant entendu, dans ce derniers cas, que la teneur en Fe est d'au plus 1%,
• le reste étant essentiellement constitué de Cu et d'impuretés habituelles.

2. Moule selon la revendication 1, **caractérisé en ce que** ledit alliage contient, en poids :
• 0,02-1,0% au total d'un ou plusieurs éléments choisis parmi Sc, Sr, Y, Zr et Hf,
• et/ou 0,02-2,0% au total d'un ou plusieurs lanthanides.

3. Moule selon la revendication 1 ou 2, **caractérisé en ce que** ledit alliage contient, en poids, 0,1-0,5% d'Y.

4. Moule selon l'une des revendications 1 à 3, **caractérisé en ce que** ledit alliage contient plusieurs lanthanides, chacun à raison de 0,01 à 0,8% en poids.

5. Moule selon la revendication 4, **caractérisé en ce que** ledit alliage contient, en poids :
• 0,05-0,7% de Ce,
• 0,04-0,4% de La,
• 0,02-0,4% de Nd, et
• 0,005-0,05% de Pr.

6. Moule selon l'une des revendications 1 à 5, **caractérisé en ce que** ledit alliage contient, en poids, 0,2-0,8% de Si.

7. Moule selon des revendications 1 à 5, **caractérisé en ce que** ledit alliage contient, en poids, 0,6-1,4% de Mn.

8. Moule selon l'une des revendications 1 à 7, **caractérisé en ce que** ledit alliage contient, en poids :
• 8-11% d'Al,
• 3,5-5,5% de Ni,
• 3,5-5,5% de Fe.

9. Moule selon l'une des revendications 1 à 7, **caractérisé en ce que** ledit alliage contient, en poids :
• 8-11% d'Al,
• 14-16% de Ni,
• au plus1% de Fe.

10. Moule selon la revendication 9, **caractérisé en ce que** ledit alliage contient, en poids, 8-10% de Zn.

11. Partie d'empreinte d'un moule selon l'une des revendications 1 à 12, constituée d'un alliage cupro-aluminium contenant, en poids :
• 0,02-3,0% au total d'un ou plusieurs éléments choisis parmi Sc, Sr, Y, Zr et Hf,
• et/ou 0,02-4,0% au total d'un ou plusieurs lanthanides,
ladite partie appartenant à une coquille ou à un fond de moule ébaucheur ou de moule finisseur ou à un moule de bague.

## Patentansprüche

1. Form für die Herstellung von Glaserzeugnissen, bei welcher wenigstens ein Teil der Innenfläche aus einer Kupfer-Aluminium-Legierung besteht, **dadurch gekennzeichnet, dass** diese gewichtsmäßig
- insgesamt 0,02 % bis zur Löslichkeitsgrenze eines oder mehrerer Elemente, die aus Sc, Sr, Y, Zr und Hf ausgewählt sind, und/oder
- insgesamt 0,02 % bis zur Löslichkeitsgrenze eines oder mehrerer Lanthanoide,
- 5 bis 15 % Al,
- 2 bis 7 % oder 12 bis 18 % Ni,
- 2 bis 7 % oder höchstens 1 % Fe, wobei in letzterem Fall der Ni-Gehalt 12 bis 18 % beträgt,
- 0,05 bis 1,5 % Si,
- 0,02 bis 2 % Mn und
- höchstens 0,25 % oder 6 bis 12 % Zn, wobei in letzterem Fall der Fe-Gehalt höchstens 1 % beträgt, enthält und
- der Rest im Wesentlichen aus Cu und den üblichen Verunreinigungen besteht.

2. Form nach Anspruch 1, **dadurch gekennzeichnet, dass** die Legierung gewichtsmäßig
- insgesamt 0,02 bis 1,0 % eines oder mehrerer Elemente, die aus Sc, Sr, Y, Zr und Hf ausgewählt sind, und/oder
- insgesamt 0,02 bis 2,0 % eines oder mehrerer Lanthanoide enthält.

3. Form nach Anspruch 1 oder 2, **dadurch gekennzeichnet, dass** die Legierung 0,1 bis 0,5 Gew.-% Y enthält.

4. Form nach einem der Ansprüche 1 bis 3, **dadurch gekennzeichnet, dass** die Legierung mehrere Lanthanoide mit einem Anteil von jeweils 0,01 bis 0,8 Gew.-% enthält.

5. Form nach Anspruch 4, **dadurch gekennzeichnet, dass** die Legierung gewichtsmäßig
- 0,05 bis 0,7 % Ce,
- 0,04 bis 0,4 % La,
- 0,02 bis 0,4 % Nd und
- 0,005 bis 0,05 % Pr
enthält.

6. Form nach einem der Ansprüche 1 bis 5, **dadurch gekennzeichnet, dass** die Legierung 0,2 bis 0,8 Gew.-% Si enthält.

7. Form nach den Ansprüchen 1 bis 5, **dadurch gekennzeichnet, dass** die Legierung 0,6 bis 1,4 Gew.-% Mn enthält.

8. Form nach einem der Ansprüche 1 bis 7, **dadurch gekennzeichnet, dass** die Legierung gewichtsmäßig
- 8 bis 11 % Al
- 3,5 bis 5,5 % Ni und
- 3,5 bis 5,5 % Fe
enthält.

9. Form nach einem der Ansprüche 1 bis 7, **dadurch gekennzeichnet, dass** die Legierung gewichtsmäßig
- 8 bis 11 % Al
- 14 bis 16 % Ni und
- höchstens 1 % Fe
enthält.

10. Form nach Anspruch 9, **dadurch gekennzeichnet, dass** die Legierung 8 bis 10 Gew.-% Zn enthält.

11. Teil der Innenfläche einer Form nach einem der Ansprüche 1 bis 12, der aus einer Kupfer-Aluminium-Legierung besteht, die gewichtsmäßig
- insgesamt 0,02 bis 3,0 % eines oder mehrerer Elemente, die aus Sc, Sr, Y, Zr und Hf ausgewählt sind, und/oder
- insgesamt 0,02 bis 4,0 % eines oder mehrerer Lanthanoide enthält,
wobei der Teil zu einer Kokille oder einem Boden einer Vorform, Fertigform oder Ringform gehört.

## Claims

1. Mould for manufacturing glass products, where at least part of the mould cavity is formed from a cupro-aluminium alloy, **characterised in that** the said alloy contains, by weight:
• 0.02% in total at the solubility limit of one or more elements chosen from amongst Sc, Sr, Y, Zr and Hf,
• and/or 0.02% in total at the solubility limit of one or more lanthanides,
• 5-15% Al,
• 2-7% or 12-18% Ni,
• 2-7% or no more than 1% Fe, it being understood, in the latter case, that the Ni content is between 12% and 18%,
• 0.05-1.5% Si,
• 0.02-2% Mn,
• no more than 0.25% or 6-12% Zn, it being understood, in the latter case, that the Fe content is no more than 1%,
• the remainder consisting essentially of Cu and normal impurities.

2. Mould according to Claim 1, **characterised in that** the said alloy contains, by weight:
• 0.02-1.0% in total of one or more elements chosen from amongst Sc, Sr, Y, Zr and Hf,
• and/or 0.02-2.0% in total of one or more lanthanides.

3. Mould according to Claim 1 or 2, **characterised in that** the said alloy contains, by weight, 0.1-0.5% Y.

4. Mould according to one of Claims 1 to 3, **characterised in that** the said alloy contains several lanthanides, each at 0.01 to 0.8% by weight.

5. Mould according to Claim 4, **characterised in that** the said alloy contains, by weight:
• 0.05-0.7% Ce,
• 0.04-0.4% La,
• 0.02-0.4% Nd, and
• 0.005-0.05% Pr.

6. Mould according to one of Claims 1 to 5, **characterised in that** the said alloy contains, by weight, 0.2-0.8% Si.

7. Mould according to one of Claims 1 to 5, **characterised in that** the said alloy contains, by weight, 0.6-1.4% Mn.

8. Mould according to one of Claims 1 to 7, **characterised in that** the said alloy contains, by weight:
• 8-11% Al,
• 3.5-5.5% Ni,
• 3.5-5.5% Fe.

9. Mould according to one of Claims 1 to 7, **characterised in that** the said alloy contains, by weight:
• 8-11% Al,
• 14-16% Ni,
• no more than 1% Fe.

10. Mould according to Claim 9, **characterised in that** the said alloy contains, by weight, 8-10% Zn.

11. Cavity part of a mould according to one of Claims 1 to 12, formed from a cupro-aluminium alloy containing, by weight:
• 0.02-3.0% in total of one or more elements chosen from amongst Sc, Sr, Y, Zr and Hf,
• and/or 0.02-4.0% in total of one or more lanthanides,
the said part belonging to a shell or to a bottom of a precasting mould or finishing mould or ring mould.
